# EUROPÄISCHE PATENTSCHRIFT

(11) **EP 3 086 383 B1**
(45) Veröffentlichungstag und Bekanntmachung des Hinweises auf die Patenterteilung: **08.05.2019**
(21) Anmeldenummer: 16162846.6
(22) Anmeldetag: 30.03.2016
(51) Int. Cl.: H01M 2/04, H01M 2/10, H01M 10/655, H01M 10/6562

(54) **GEHÄUSE FÜR EIN MOBILES STROMVERSORGUNGSGERÄT**
CASE FOR MOBILE POWER SUPPLY DEVICE
BOITIER POUR UN APPAREIL D'ALIMENTATION ELECTRIQUE MOBILE

(30) Priorität: 22.04.2015 DE 102015207340
(43) Veröffentlichungstag der Anmeldung: 26.10.2016
(73) Patentinhaber: ROBERT BOSCH GMBH, 70442 Stuttgart (DE)
(72) Erfinder: Ellam, Mark, Stowmarket, Suffolk IP14 1TX (GB); Thornton, Darren, Mistley, Essex Co11 1UD (GB); Koepf, Christian, Wherstead, IP92BA (GB)

(56) Entgegenhaltungen:
- EP-A1- 3 182 502
- DE-A1-102010 037 656
- US-A1- 2013 344 359

## Beschreibung

Die Erfindung betrifft ein mobiles Stromversorgungsgerät mit einem Gehäuse gemäß Patentanspruch 1, sowie einen Tragrahmen für das mobile Stromversorgungsgerät gemäß Patentanspruch 11.

### Stand der Technik

Aus WO 2008/010801 A2 ist ein mobiles Stromversorgungsgerät mit einem Gehäuse bekannt. Dabei ist in einem Gehäuse eine Batterie angeordnet. Das Gehäuse weist Räder, einen Stehfuß und einen Handgriff auf, sodass das Gehäuse auf einfache Weise bewegt werden kann. Zudem weist das Gehäuse Stecker auf, über die elektrische Geräte an das Gehäuse anschließbar sind.

Die US 2013/0344359 A1 und die DE 10 2010 037 656 A1 offenbaren jeweils ein mobiles Stromversorgungsgerät mit einem Gehäuse, bestehend aus einem ersten Teilgehäuse und aus einem zweiten Teilgehäuse. Das erste Teilgehäuse und das zweite Teilgehäuse bestehen jeweils aus einem Boden bzw. einem Deckel und vier Seitenwänden. Die Seitenwände des zweiten Teilgehäuses weisen eine kleinere Höhe auf, als die Seitenwände des ersten Teilgehäuses. Über lösbare Verbindungsmittel sind die beiden Teilgehäuse des mobilen Stromversorgungsgeräts miteinander verbunden.

### Offenbarung der Erfindung

Die Aufgabe der Erfindung besteht darin, ein verbessertes Gehäuse für ein mobiles Stromversorgungsgerät, ein verbessertes Stromversorgungsgerät sowie eine verbesserte Tragemöglichkeit für das Gehäuse des mobilen Stromversorgungsgeräts bzw. für das mobile Stromversorgungsgerät bereitzustellen.

Die Aufgabe der Erfindung wird durch das Stromversorgungsgerät gemäß Patentanspruch 1 und durch einen Tragrahmen für das mobile Stromversorgungsgerät gemäß Patentanspruch 11 gelöst. Das Gehäuse weist ein erstes Teilgehäuse und ein zweites Teilgehäuse auf. Das erste Teilgehäuse weist einen Boden und vier Seitenwände auf. Das zweite Teilgehäuse weist einen Deckel und Seitenwände auf. Das erste und das zweite Teilgehäuse sind über lösbare Verbindungsmittel verbunden, wobei die Seitenwände des zweiten Teilgehäuses eine kleinere Höhe als die Seitenwände des ersten Teilgehäuses aufweisen.

Erfindungsgemäß ist vorgesehen, dass das zweite Teilgehäuse zwei Ausbuchtungen aufweist, wobei die zwei Ausbuchtungen nebeneinander angeordnet sind. Ausgehend vom zweiten Rahmen erstrecken sich die Ausbuchtungen nach oben, wobei zwischen den zwei Ausbuchtungen ein Deckelboden ausgebildet ist, und der Deckelboden auf der Höhe des zweiten Rahmens angeordnet ist. Mit Vorteil, weist das zweite Teilgehäuse somit zwei voneinander wenigstens über Seitenwände abgegrenzte Teilräume auf. Durch die Ausbildung der Ausbuchtungen ist das zweite Teilgehäuse stabiler ausgebildet. Zudem können zwei getrennte Teilräume für unterschiedliche Bauteile oder Funktionen vorgesehen werden. Dadurch kann beispielsweise ein Kühlbereich von elektrischen Schaltungen getrennt werden.

Weiterhin betrifft die Erfindung einen Tragrahmen für das mobile Stromversorgungsgerät, wobei der Tragrahmen wenigstens zwei Bodenabschnitte aufweist. Die zwei Bodenabschnitte sind nebeneinander angeordnet und wenigstens über eine Bodenstrebe miteinander verbunden. Die Bodenabschnitte gehen in jeweils zwei Seitenabschnitte über, wobei das Gehäuse mit dem Boden auf der Bodenstrebe aufsitzt. Die vier Seitenabschnitte sind im Bereich von vier Eckbereichen des ersten Teilgehäuses angeordnet und nach oben bis über das Gehäuse hinaus geführt. Auf diese Weise wird das Gehäuse an den vier Eckbereichen gegenüber mechanischen Einwirkungen geschützt.

Weitere Ausführungsformen des Stromversorgungsgeräts und des Tragrahmens sind in den abhängigen Ansprüchen angegeben.

In einer Ausführung weist das erste Teilgehäuse einen ersten Rahmen auf. Das zweite Teilgehäuse weist einen zweiten Rahmen auf. Die zwei Rahmen liegen aufeinander und sind über Verbindungsmittel miteinander verbinden. Auf diese Weise kann eine sichere und stabile Verbindung der zwei Teilgehäuse zu einem Gehäuse erreicht werden.

In einer weiteren Ausführungsform sind der erste und der zweite Rahmen umlaufend um die Teilgehäuse ausgebildet. Dadurch wird eine erhöhte Stabilität sowohl der Teilgehäuse als auch der Verbindung zwischen den Teilgehäusen erreicht.

In einer weiteren Ausführungsform ist in dem Deckelbodens des zweiten Teilgehäuses, der zwischen den Ausbuchtungen ausgebildet ist, wenigstens ein Verbindungsmittel vorgesehen, mit dem das zweite Teilgehäuse am Gehäuse befestigt ist. Auf diese Weise werden eine erhöhte Stabilität des Gehäuses und eine Verbesserung der Befestigung des zweiten Teilgehäuses erreicht.

In einer weiteren Ausführungsform weist das zweite Teilgehäuse einen elektrischen Anschluss zum Anschließen einer elektrischen Leitung auf. Insbesondere kann der elektrische Anschluss an einer der Ausbuchtungen des Teilgehäuses ausgebildet sein. Auf diese Weise kann mit einfachen Mitteln ein elektrischer Anschluss am Gehäuse gut zugänglich vorgesehen werden.

In einer weiteren Ausführungsform weist das zweite Teilgehäuse eine elektrische Anzeige zur Darstellung einer Information auf. Die elektrische Anzeige kann an einer der Ausbuchtungen des zweiten Teilgehäuses ausgebildet sein. Mithilfe der elektrischen Anzeige können Betriebsparameter der Batterie oder des Stromversorgungsgerätes gut sichtbar dargestellt werden.

In einer weiteren Ausführungsform weist das zweite Teilgehäuse, insbesondere die zweite Ausbuchtung des zweiten Teilgehäuses Lüftungsschlitze auf. Mithilfe der Lüftungsschlitze kann ein Luftstrom in das Gehäuse geführt werden. Der Luftstrom kann beispielsweise für eine Kühlung vorgesehen sein. Abhängig von der gewählten Ausführungsform können in einem vorgegebenen Abstand, beispielsweise an gegenüberliegenden Bereichen des zweiten Teilgehäuses, Schlitze für eine Belüftung oder Kühlung vorgesehen werden. Dadurch kann ein Luftstrom durch das zweite Teilgehäuse in einer gewünschten Strömungsrichtung geführt werden.

In einer weiteren Ausführungsform sind die zwei Ausbuchtungen des zweiten Teilgehäuses parallel zu einer Längsseite des Gehäuses ausgebildet. Auf diese Weise werden zwei relativ große Teilräume definiert. Somit steht für beide Teilräume ein großes Volumen zur getrennten Unterbringung von Bauteilen und/oder Funktionen zur Verfügung.

In einer weiteren Ausführungsform weist das erste Teilgehäuse Versteifungselemente auf, die beispielsweise in Form einer Einbuchtung ausgebildet sind. Abhängig von der gewählten Ausführungsform kann an gegenüberliegenden Seitenwänden des ersten Teilgehäuses jeweils eine Einbuchtung vorgesehen sein.

In einer weiteren Ausführungsform sind auf einer Unterseite des Bodens des ersten Teilgehäuses vier voneinander im Abstand angeordnete Füße ausgebildet, die über die Unterseite des Bodens nach unten herausragen. Die vier Füße sind beispielsweise in Eckbereichen des Gehäuses angeordnet und ermöglichen ein stabiles Stehen des Gehäuses auch auf einem unebenen Untergrund.

In einer Ausführung sind der erste Rahmen und der zweite Rahmen wenigstens abschnittsweise über eine Nut und einen Randbereich miteinander mechanisch verbunden sind. Dadurch können relative Bewegungen der Teilgehäuse gegeneinander abgefedert werden, ohne die Verbindungsmittel zu stark zu belasten.

In einer weiteren Ausführungsform ist das Gehäuse an der wenigstens einen Bodenstrebe des Tragrahemens befestigt. Abhängig von der gewählten Ausführungsform können zwei Bodenstreben vorgesehen sein, auf denen das Gehäuse aufsitzt oder mit denen das Gehäuse befestigt ist. Auf diese Weise wird eine sichere und stabile Befestigung des Gehäuses im Tragrahmen erreicht.

In einer weiteren Ausführungsform weist das erste Teilgehäuse am Boden elastische Befestigungsmittel auf, mit denen das erste Teilgehäuse an der wenigstens einen Bodenstrebe befestigt ist. Mithilfe der elastischen Befestigungsmittel kann insbesondere eine seitliche Schwingung des Gehäuses gegenüber dem Tragrahmen gedämpft ausgebildet werden. Dadurch werden Schwingungen, die auf den Tragrahmen einwirken, nur gedämpft auf das Gehäuse weiter geleitet.

Die elastischen Befestigungsmittel können zum Beispiel in Form einer Aufnahme ausgebildet werden, die über elastische Stege mit dem Boden des ersten Teilgehäuses verbunden sind. Zudem kann die Aufnahme als Teil des Bodens ausgebildet sein, der über elastische Stege mit dem Boden verbunden ist. Weiterhin ist ein Verbindungsmittel angeordnet, das die Bodenstrebe mit der Aufnahme des ersten Teilgehäuses verbindet. Das Verbindungsmittel kann beispielsweise in Form einer Schraube ausgebildet sein.

In einer weiteren Ausführungsform ist am Tragrahmen wenigstens ein weiterer elektrischer Anschluss vorgesehen. Der weitere elektrische Anschluss ist z.B. über ein elektrisches Kabel mit dem Gehäuse verbunden. Somit können mehrere elektrische Anschlüsse zur Verfügung gestellt werden. Insbesondere kann nachträglich ein elektrischer Anschluss unabhängig vom Gehäuse vorgesehen werden. Weiterhin kann ein Schutzbügel vorgesehen sein, der den weiteren elektrischen Anschluss gegenüber mechanischen Einwirkungen schützt.

In einer weiteren Ausführungsform können am ersten Rahmen Löcher ausgebildet sein, die beispielsweise für eine Entlüftung oder eine Entwässerung vorgesehen sind.

Zudem kann der Tragrahmen Haltegriffe an gegenüberliegenden Enden aufweisen, mit denen eine Bedienperson am Tragrahmen angreifen kann, um den Tragrahmen mit dem Gehäuse zu tragen.

Weiterhin kann der Tragrahmen obere Schutzbügel aufweisen, die bis über das erste Teilgehäuse nach oben sich hinaus erstrecken. Dadurch kann das Gehäuse auch von oben gegenüber Beschädigungen geschützt werden. Zudem kann der Tragrahmen seitliche Versteifungsstreben aufweisen, die beispielsweise auf der Höhe des umlaufenden Rahmens des Gehäuses ausgebildet sind.

Abhängig von der gewählten Ausführungsform kann die Bodenstrebe aus einem in Bezug auf eine Durchbiegung elastischeren Material oder einer elastischeren Geometrie im Vergleich zu dem Material oder der Geometrie des Tragrahmens ausgebildet sein. Beispielsweise kann die Bodenstrebe aus einem im Querschnitt rechteckförmigen Material, insbesondere einem Metall ausgebildet sein. Zudem können weitere Teile des Tragrahmens einen kreisförmigen Querschnitt aufweisen, insbesondere aus einem Hohlrohr ausgebildet sein.

Die Erfindung wird im Folgenden anhand der Figuren näher erläutert. Es zeigen
Fig. 1 eine erste Seitenansicht des Gehäuses,
Fig. 2 eine zweite Seitenansicht des Gehäuses,
Fig. 3 eine dritte Seitenansicht des Gehäuses,
Fig. 4 eine vierte Seitenansicht des Gehäuses,
Fig. 5 eine Draufsicht auf einen Deckel des Gehäuses,
Fig. 6 eine Draufsicht auf einen Boden des Gehäuses,
Fig. 7 eine vergrößerte Ansicht von unten auf einen Rahmen des ersten Teilgehäuses und den Boden,
Fig. 8 einen schematischen Teilquerschnitt durch einen Randbereich des Gehäuses,
Fig. 9 eine vergrößerte Darstellung eines Teilbereiches des Deckels,
Fig. 10 eine vergrößerte Darstellung eines Seitenbereiches des Deckels,
Fig. 11 eine erste Ansicht des Gehäuses, das in einem Tragrahmen angeordnet ist,
Fig. 12 eine zweite Ansicht des Gehäuses mit Tragrahmen,
Fig. 13 eine dritte Ansicht des Gehäuses mit Tragrahmen,
Fig. 14 eine vierte Ansicht des Gehäuses mit Tragrahmen,
Fig. 15 eine Ansicht von oben auf das Gehäuse mit Tragrahmen,
Fig. 16 eine Ansicht von unten auf das Gehäuse mit Tragrahmen,
Fig. 17 eine zweite Ausführungsform des Tragrahmens mit einem Gehäuse,
Fig. 18 eine Seitenansicht der zweiten Ausführungsform des Tragrahmen,
Fig. 19 eine Ansicht von oben auf die zweite Ausführung des Tragrahmens,
Fig. 20 eine dritte Ausführungsform eines Tragrahmens mit Gehäuse,
Fig. 21 eine Seitenansicht der dritten Ausführungsform des Tragrahmens,
Fig. 22 eine Ansicht von oben auf die dritte Ausführungsform des Tragrahmens, und
Fig. 23 einen Tragrahmen mit Räder und Haltegriff.

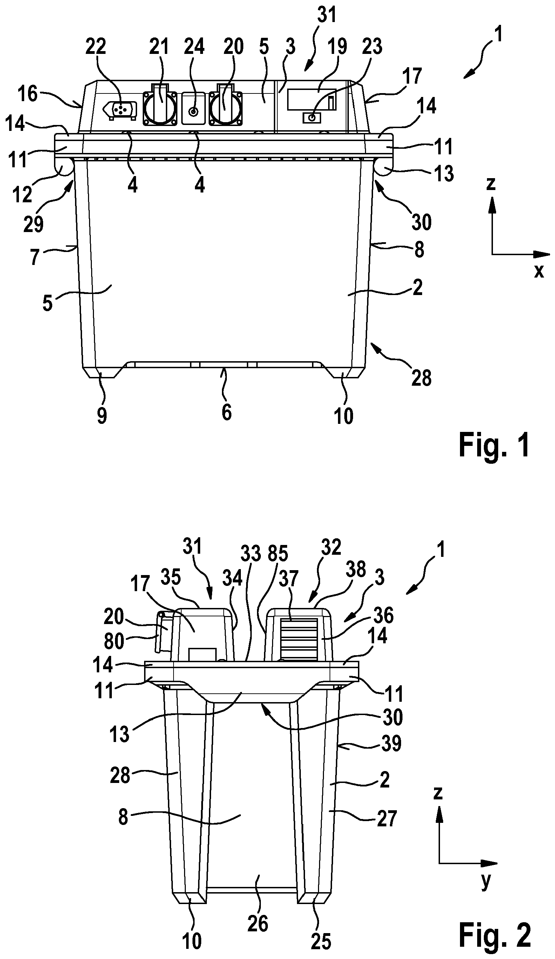

Fig. 1 zeigt eine Seitenansicht eines mobilen Stromversorgungsgerätes mit einem Gehäuse 1. Im Gehäuse 1 ist eine Batterie, ein Ladegerät zum Laden der Batterie. Zudem weist das Gehäuse 1 eine elektrische Schaltung zum Bereitstellen eines Stromes durch die Batterie zur Versorgung eines elektrisch betriebenen externen Gerätes oder zum Aufladen eines externen Akkus auf. Das elektrisch betriebene Gerät kann z.B. ein elektrisch betriebenes Handwerkzeug wie z.B. eine Bohrmaschine oder ein elektrisch betriebenes Gartenwerkzeug wie z.B. eine Heckenschere oder ein Rasenmäher sein.

Das Gehäuse 1 weist ein erstes Teilgehäuse 2 und ein zweites Teilgehäuse 3 auf. Abhängig von der gewählten Ausführungsform kann das Gehäuse 1 auch aus mehreren Teilgehäusen ausgebildet sein. Das erste Teilgehäuse 2 ist wannenartig ausgebildet und weist in der dargestellten Ausführungsform eine größere Höhe entlang einer z-Achse als das zweite Teilgehäuse 3 auf. Das zweite Teilgehäuse 3 ist auf das erste Teilgehäuse 2 aufgesetzt und über Verbindungsmittel 4 mit dem ersten Teilgehäuse 2 verbunden. In Fig. 1 ist eine erste Seitenwand 5 des ersten Teilgehäuses 2 dargestellt, die sich entlang einer x-Achse erstreckt. Die z-Achse und die x-Achse stehen senkrecht aufeinander. Die erste Seitenwand 5 geht in einem unteren Bereich in einen Boden 6 über. Der Boden 6 ist in einer Ebene senkrecht zur z-Achse angeordnet. Zudem geht die erste Seitenwand 5 in seitlichen Endbereichen seitlich in eine zweite und in eine dritte Seitenwand 7, 8 über. Die zweite und die dritte Seitenwand sind gegenüber liegend angeordnet. Am Boden 6 sind in Eckbereichen Füße 9, 10 ausgebildet, wobei die Füße 8,9 nach unten über eine Ebene des Bodens entlang einer z-Achse herausragen. Die Füße 8,9 dienen dazu, um einen stabilen Stand des Gehäuses 1 auch auf einem unebene Untergrund zu ermöglichen. Weiterhin wird ein Umkippen des Gehäuses 1 durch die Anordnung von vier Füßen 8,9 in Eckbereichen des Bodens 3 erschwert.

Das erste Teilgehäuse 2 weist einen umlaufenden Rahmen 11 auf, der an oberen Randbereichen der Seitenwände 5, 7, 8 gegenüber liegend zum Boden 3 ausgebildet ist. Der Rahmen 11 ragt seitlich über die Seitenwände 5, 7, 8 hinaus und ist beispielsweise parallel zum Boden 6 angeordnet. Zudem weisen die zweite und dritte Seitenwand 7, 8 angrenzend an den Rahmen 11 Haltegriffe 12, 13 auf. Abhängig von der gewählten Ausführungsform können die Haltegriffe 12,13 auf einer Unterseite, die gegenüberliegend zum zweiten Teilgehäuse 3 ausgebildet ist, eine Griffausnehmung 29, 30 aufweisen. Die Griffausnehmung 29, 30 ist zwischen der Seitenwand 7,8 und dem Haltegriff 12,13 ausgebildet und dient zur Aufnahme von Fingerspitzen beim Tragen des Gehäuses 1. Abhängig von der gewählten Ausführungsform sind die Seitenwände 5, 7, 8 senkrecht zur Ebene des Bodens 6 in einer z-x Ebene angeordnet. Zudem können die Seitenwände 5, 6, 7, wie in dem dargestellten Ausführungsbeispiel gezeigt, ausgehend vom Boden 6 nach außen geneigt angeordnet sein und einen Winkel zur z-Achse aufweisen.

Das zweite Teilgehäuse 3 weist einen weiteren umlaufenden Rahmen 14 auf. Der weitere Rahmen 14 liegt auf dem Rahmen 11 auf. Zudem weist das zweite Teilgehäuse 3 eine erste Ausbuchtung 31 auf, die sich entlang der x-Achse erstreckt und durch vier weitere Seitenwände 15,16,17 und eine Deckelwand 35 begrenzt wird. Die Deckelwand 35 ist einen festgelegten Abstand in der z-Achse höher als der zweite Rahmen 14 angeordnet. Die erste Ausbuchtung 31 weist die weitere erste Seitenwand 15 auf, die in seitlichen Endbereichen in die weitere zweite bzw. weitere dritte Seitenwand 16, 17 übergeht. Die weitere zweite und die weitere dritte Seitenwand 16,17 sind an gegenüber liegenden Enden der ersten Ausbuchtung 31 angeordnet. Die weitere zweite und dritte Seitenwand 16,17 sind entlang der y-Achse angeordnet, die senkrecht zur z-Achse und senkrecht zur x-Achse angeordnet ist. Die weiteren vier Seitenwände 15, 16, 17 sind seitlich gegenüber einem äußeren Randbereich des weiteren Rahmens 14 nach innen versetzt angeordnet. Zudem sind die weiteren Seitenwände 15, 16, 17 in der dargestellten Ausführungsform ausgehend von dem weiteren Rahmen 14 in Richtung auf den Deckelboden 35 geneigt nach innen verlaufend angeordnet. Somit sind die weiteren Seitenwände geneigt zur z-Achse angeordnet. In der dargestellten Ausführungsform ist an der weiteren ersten Seitenwand 15, die entlang der ersten Seitenwand angeordnet ist, eine elektrische Anzeige 19, ein erster elektrischer Anschluss 20, ein zweiter elektrischer Anschluss 21 und ein dritter elektrischer Anschluss 22 angeordnet. Die Anzeige 19 kann in einem Winkel zwischen 90° und 0° zurx-y Ebene angeordnet sein. In dem dargestellten Beispiel ist die Anzeige im Winkel von 60° geneigt zur x-y Ebene angeordnet. Dadurch kann die Anzeige besser abgelesen werden. Der erste, zweite und/oder dritte elektrische Anschluss 20, 21,22 sind z.B. in Form einer Steckdose und/oder eines Steckers ausgebildet. Abhängig von der gewählten Ausführungsform können die elektrischen Anschlüsse 20, 21, 22 die gleiche Form oder unterschiedliche Formen aufweisen. Beispielsweise kann der dritte elektrische Anschluss 22 zum Anschluss eines Ladekabels für die aufladbare Batterie vorgesehen sein und mit einer elektrischen Ladeschaltung verbunden sein. Zudem können der erste und/oder der zweite elektrische Anschluss 20, 21 zum Anschluss eines Versorgungskabels zum Versorgen eines elektrischen Gerätes mit Strom oder zum Laden einer Batterie oder eines Akkus ausgebildet sein. Die elektrische Anzeige 19 kann beispielsweise in Form eines LCD-Displays ausgebildet sein und z.B. elektrische Parameter der Batterie darstellen. Zudem können ein erstes und/oder ein zweites Schaltelement 23, 24 auf der weiteren ersten Seitenwand 15 ausgebildet sein.

Abhängig von der gewählten Ausführungsform können das erste Teilgehäuse und das zweite Teilgehäuse aus einem gleichen Material, insbesondere aus Kunststoff, ausgebildet sein. Zudem können abhängig von der gewählten Ausführungsform das erste und das zweite Teilgehäuse 2, 3 aus unterschiedlichen Materialien oder mit unterschiedlichen Wandstärken ausgebildet sein. Beispielsweise kann das erste Teilgehäuse 2 aus einem weicheren Material als das zweite Teilgehäuse 3 ausgebildet sein. Zudem kann das erste Teilgehäuse 2 aus dem gleichen Material aber mit geringerer Wandstärke als das zweite Teilgehäuse ausgebildet sein. Beispielsweise können das erste und/oder das zweite Teilgehäuse aus einem Kunststoff ausgebildet sein.

Fig. 2 zeigt eine zweite Seitenansicht des Gehäuses 1 mit Blick auf die dritte Seitenwand 8 des ersten Teilgehäuses 2. Dabei ist zu erkennen, dass an der dritten Seitenwand 8 gegenüberliegend zum zweiten Fuß 10 ein dritter Fuß 25 am Boden 6 ausgebildet ist. Zudem weist die dritte Seitenwand 8 eine erste Einbuchtung 26 auf. Die Einbuchtung 26 ist in einem mittigen Bereich der dritten Seitenwand 8 zwischen abgerundeten Eckbereichen 27, 28 angeordnet. Die Einbuchtung 26 ist gegenüber seitlichen Randbereichen der Eckbereiche nach innen versetzt angeordnet. Am oberen Endbereich der Einbuchtung 26 ist der zweite Haltegriff 13 ausgebildet. Der zweite Haltegriff 13 wird durch eine Verdickung des Rahmens 11 im Bereich der dritten Seitenwand 8 gebildet, wobei der Rahmen 11 nach unten und nach innen in Richtung auf die zurückgesetzte Fläche der dritten Seitenwand 8 realisiert ist. Durch die Einbuchtung 26 wird eine Versteifung des ersten Teilgehäuses 2 erreicht. Zudem wird durch die Einbuchtung Raum für die Ausbildung des zweiten Haltegriffes 13 bereitgestellt.

Zudem sind anhand von Fig. 2 deutlich die erste und die zweite Ausbuchtung 31, 32 zu erkennen. Die erste und die zweite Ausbuchtung 31, 32 gehen von einer Deckelebene aus, die durch den weiteren Rahmen 14 und einen Deckelboden 33 gebildet wird. Der Deckelboden 33 ist zwischen den zwei Ausbuchtungen 31, 32 ausgebildet. Jede Ausbuchtung 31,32 weist vier Seitenwände 15, 16, 17, 34, 40, 41, 36 auf. Zudem gehen die vier Seitenwände in eine Deckelwand 35,38 über. Fig. 2 zeigt den Blick auf die weitere dritte Seitenwand 17 der ersten Ausbuchtung 31 und auf die zusätzliche dritte Seitenwand 36 der zweiten Ausbuchtung 32. Zudem ist die zusätzliche vierte Seitenwand 85 dargestellt, die gegenüber liegend zur weiteren vierten Seitenwand 34 der ersten Ausbuchtung 31 angeordnet ist.

An der zusätzlichen dritten Seitenwand 36 sind in dem dargestellten Ausführungsbeispiel Schlitze 37 vorgesehen. Die weitere dritte Seitenwand 17 ist dagegen geschlossen ausgebildet. Zudem ist erkennbar, dass der erste elektrische Anschluss 20 seitlich über die weitere erste Seitenwand 15 hinausragt und mit einer schwenkbar gelagerten Kappe 80 abgedeckt ist. Auf die Kappe 80 kann auch verzichtet werden. Zudem kann der erste elektrische Anschluss, der z.B. in Form einer Steckdose ausgebildet ist, auch bündig mit der weiteren ersten Seitenwand 15 abschließen. In der ersten Ausbuchtung 31 können elektrische Schaltungen wie z.B. ein Ladegerät oder ein Spannungswandler usw. angeordnet sein.

In der dargestellten Ausführungsform ist die weitere dritte Seitenwand 17 im Wesentlichen gleich groß wie die zusätzliche dritte Seitenwand 36 ausgebildet. Zudem ist die erste Deckelwand 35 der ersten Ausbuchtung 31 auf gleicher Höhe angeordnet wie die zweite Deckelwand 38 der zweiten Ausbuchtung 32. Abhängig von der gewählten Ausführungsform können die erste und die zweite Deckelwand 35, 38 auch auf unterschiedlichen Höhen angeordnet sein. Zudem können die Seitenwände der ersten und der zweiten Ausbuchtung 31, 32 unterschiedliche Flächengrößen, Flächengeometrie und/oder Neigungen aufweisen.

Anhand von Fig. 2 ist deutlich zu erkennen, dass der Rahmen 11 seitlich über obere Endbereiche der Seitenwände 5, 7, 8 hinausragt. Zudem ragt der weitere Rahmen 14 seitlich über die Seitenwände der Ausbuchtungen 31, 32 hinaus. Weiterhin sind Verbindungsmittel 4 beispielsweise in Form von Schrauben vorgesehen, mit denen das erste und das zweite Teilgehäuse 2, 3 im Bereich der Rahmen 11, 14 miteinander verbunden sind.

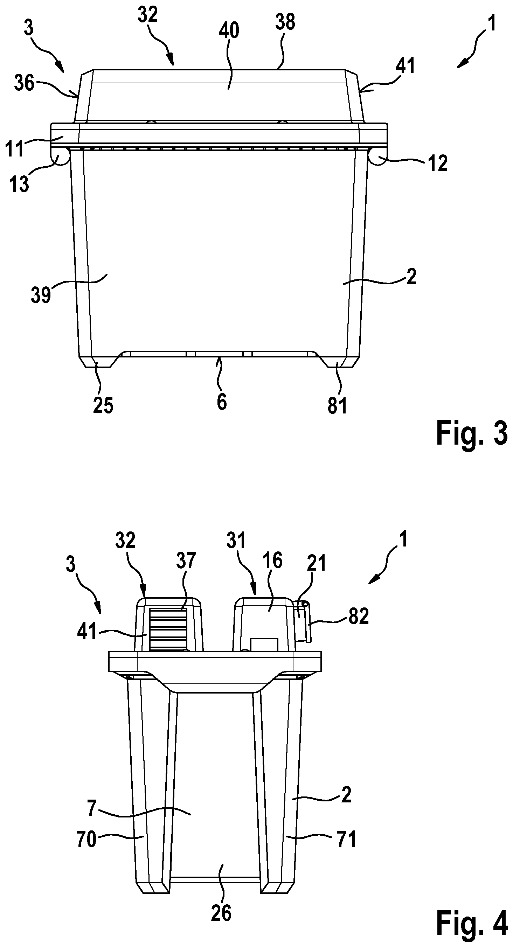

Fig. 3 zeigt das Gehäuse 1 mit Blick auf eine vierte Seitenwand 39, die gegenüberliegend zur ersten Seitenwand 5 angeordnet ist. Zudem ist ein vierter Fuß 81 erkennbar, der auf der Unterseite des Bodens 6 ausgebildet ist. Dabei ist zu erkennen, dass auch die zweite Ausbuchtung 32 parallel zu einer Längsseite des Gehäuses 1 angeordnet ist. Die zweite Ausbuchtung 32 weist eine zusätzliche erste Seitenwand 40 auf, die entlang der vierten Seitenwand 39 des ersten Teilgehäuses 2 angeordnet ist.

Fig. 4 zeigt das Gehäuse 1 mit Blick auf die zweite Seitenwand 7 des ersten Teilgehäuses 2und mit Blick auf eine zusätzliche zweite Seitenwand 41 der zweiten Ausbuchtung 32 auf. Die zusätzliche zweite Seitenwand 41 ist gegenüberliegend zur zusätzlichen dritten Seitenwand 36 angeordnet und weist in der dargestellten Ausführung Schlitze 37 auf. Der zweite elektrische Anschluss 21 ragt seitlich über die weitere erste Seitenwand 15 hinaus und ist mit einer schwenkbaren zweiten Kappe 82 abgedeckt.

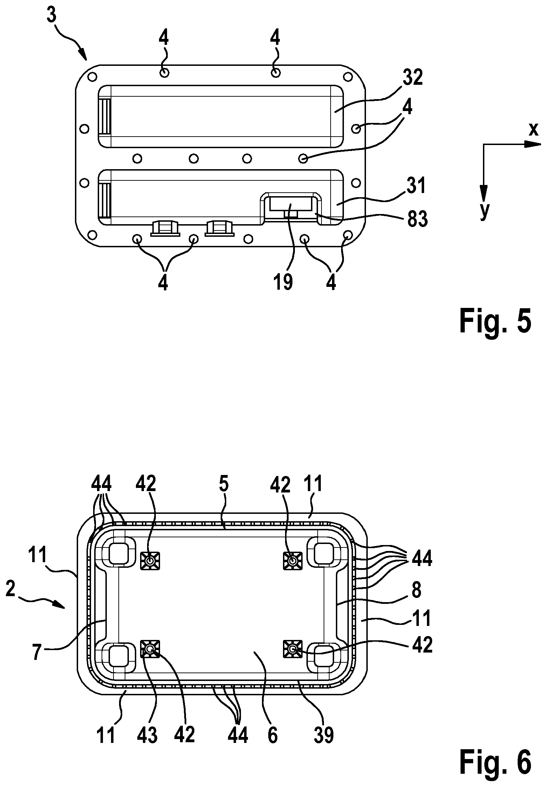

Fig. 5 zeigt eine Ansicht von oben auf das zweite Teilgehäuse 3. Dabei ist zu erkennen, dass die erste und die zweite Ausbuchtung 31, 32 parallel zur Anordnung der Längsseite des Gehäuses 1 ausgerichtet sind und insbesondere parallel zueinander angeordnet sind. Zudem sind die Seitenwände der Ausbuchtungen 31, 32 in der dargestellten Ausführungsform geneigt nach außen in Richtung auf den Deckelboden 33 verbreitert angeordnet. Weiterhin ist erkennbar, dass an der weiteren ersten Seitenwand 15 eine Ausnehmung 83 zur Ausbildung der elektrischen Anzeige 19 vorgesehen ist. Dabei ist die elektrische Anzeige 19 in einem vorgegebenen Winkel geneigt gegenüber der weiteren ersten Seitenwand 15 ausgebildet. Zudem sind Verbindungsmittel 4 umlaufend im Bereich des weiteren Rahmens 14 angeordnet. Zudem sind Verbindungsmittel 4 zwischen der ersten und der zweiten Ausbuchtung 31, 32 am Deckelboden 33 angeordnet. Vorzugsweise weisen benachbarte Verbindungsmittel 4 einen gleich großen Abstand auf. Die Verbindungsmittel 4 sind beispielsweise in Form von Schrauben oder Nieten ausgebildet.

Fig. 6 zeigt eine Ansicht von unten auf den Boden 6 des ersten Teilgehäuses 2. Dabei ist deutlich der umlaufende Rahmen 11 zu erkennen, der seitlich über die Seitenwände des ersten Teilgehäuses 2 hinausragt. Zudem sind die Füße erkennbar, die aus dem Boden 6 herausragen. Weiterhin sind in dem dargestellten Ausführungsbeispiel vier weitere Befestigungsmittel 42 am Boden 6 ausgebildet, mit denen das erste Teilgehäuse 2 z.B. an einem Tragrahmen befestigt werden kann. Die weiteren Befestigungsmittel 42 sind nahe der Füße 9,10,25,81 angeordnet. Abhängig von der gewählten Ausführungsform kann auf die weiteren Befestigungsmittel 42 auch verzichtet werden. Die weiteren Befestigungsmittel 42 sind in Form von Aufnahmen ausgebildet, die wenigstens in seitlicher Richtung elastisch mit dem Boden 6 verbunden sind. Die weiteren Befestigungsmittel 42 weisen Hülsen oder hülsenförmige Gewinde zur Aufnahme von Steckbolzen oder Schrauben auf. In einer Ausbildungsform sind die Aufnahmen in Form von Hülsen ausgebildet, die über Stege 43 mit dem Boden verbunden sind. Auf diese Weise sind die weiteren Befestigungsmittel in gewissen Grenzen seitlich elastisch dämpfend beweglich gegenüber dem Boden 6 ausgebildet. Dadurch können seitliche Schwingungen zwischen dem Tragrahmen und dem ersten Teilgehäuse 2 gedämpft werden.

Zudem sind im Rahmen 11 Löcher 44 ausgebildet. Die Löcher 44 gehen von der Unterseite des Rahmens 11 durch bis zu einer Oberseite des Rahmens 11. Auf diese Weise kann eine Entlüftung oder Entwässerung des Raumes erreicht werden, der zwischen dem ersten und dem zweiten Teilgehäuse 2, 3 gebildet ist. Abhängig von der gewählten Ausführungsform können einzelne Löcher 44 verteilt um den Rahmen 11 ausgebildet sein oder, wie in der Fig. 6 dargestellt, eine Vielzahl von Löchern 44 äquidistant verteilt um den Rahmen 11 angeordnet sein.

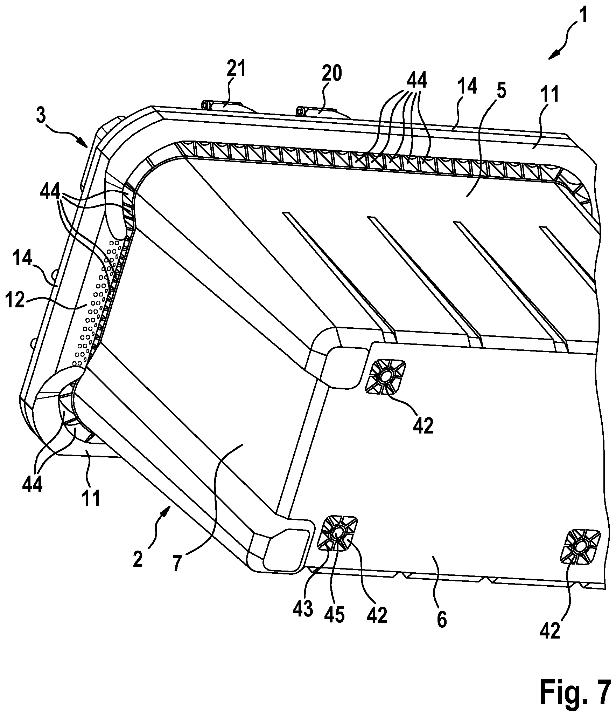

Fig. 7 zeigt in einer vergrößerten Darstellung eine perspektivische Ansicht von schräg unten auf das Gehäuse 1. Dabei ist die Ausbildung der Befestigungsmittel 42 in Form von Hülsen 45 und Stege 43 deutlich zu erkennen. Die Stege 43 gehen dabei sternförmig verteilt von der Hülse 45 aus und münden in den Boden 6. Zudem ist die Ausbildung der Löcher 44 umlaufend im Rahmen 11 deutlich erkennbar. Die Hülse 45 kann ein Gewinde zum einschrauben einer Schraube aufweisen. Weiterhin sind auch Löcher 44 im ersten und im zweiten Haltegriff 12, 13 ausgebildet, die sich durch den Haltegriff 12,13 und den Rahmen 11 erstrecken. Somit kann umlaufend eine Belüftung oder Entwässerung des Raumes zwischen dem ersten und dem zweiten Teilgehäuse 2, 3 erreicht werden.

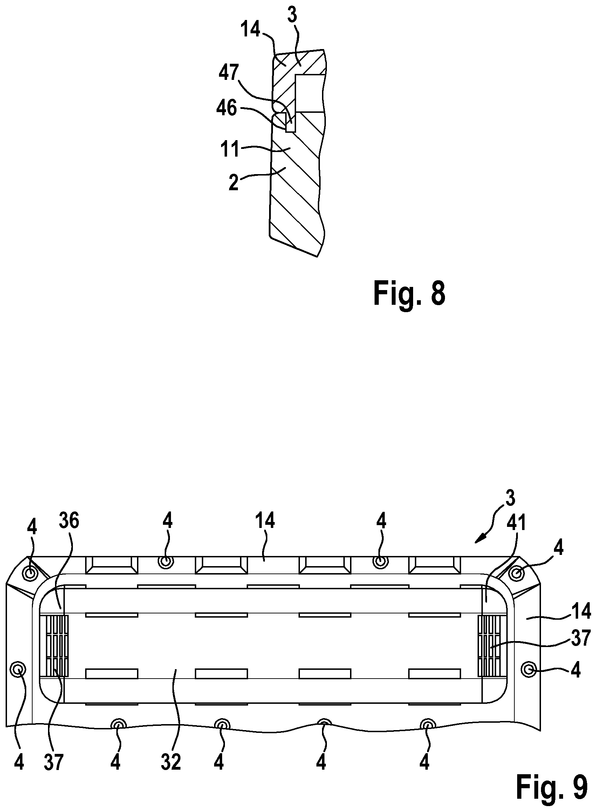

Fig. 8 zeigt in einer schematischen Teildarstellung einen Querschnitt durch den Rahmen 11 und den zweiten Rahmen 14 des ersten und des zweiten Teilgehäuses 2, 3. Dabei ist zu erkennen, dass der Rahmen 11 auf einer Oberseite eine Nut 46 aufweist. Die Nut 46 verläuft parallel zum Rand des Rahmens 11. Der zweite Rahmen 14 weist im Randbereich auf einer Unterseite einen Randbereich 47 auf. Der Randbereich 47 greift in die Nut 46 ein. Abhängig von der gewählten Ausführungsform kann der Rahmen 11 abschnittsweise eine Nut 46 oder eine umlaufende Nut 46 aufweisen. Zudem kann der zweite Rahmen 14 einen umlaufenden Randbereich 47 oder einzelne beabstandete Randbereiche 47 aufweisen. Durch die Ausbildung der Nut 46 und des Randbereiches 47 wird eine verbesserte mechanische Verbindung zwischen dem ersten und dem zweiten Teilgehäuse 2, 3 erreicht. Insbesondere können relative seitliche Verschiebungen der Teilgehäuse 2, 3 mithilfe der Nut/Steg-Anordnung abgefangen werden, ohne die Verbindungsmittel 4 seitlich zu stark belasten.

Fig. 9 zeigt einen Teilausschnitt des zweiten Teilgehäuses 3 von oben. Dabei ist zu erkennen, dass an der gegenüberliegenden zusätzlichen zweiten und dritten Seitenwand 36, 41 mehrere Schlitze 37 ausgebildet sind. Abhängig von der gewählten Ausführungsform können die Schlitze 37 auch an anderen zusätzlichen Seitenwänden der zweiten Ausbuchtung 32 ausgebildet sein. Zudem können abhängig von der gewählten Ausführungsform auch an der ersten Ausbuchtung Schlitze vorgesehen sein. In der zweiten Ausbuchtung 32 können Kühlelemente und/oder ein Kühlgebläse angeordnet sein.

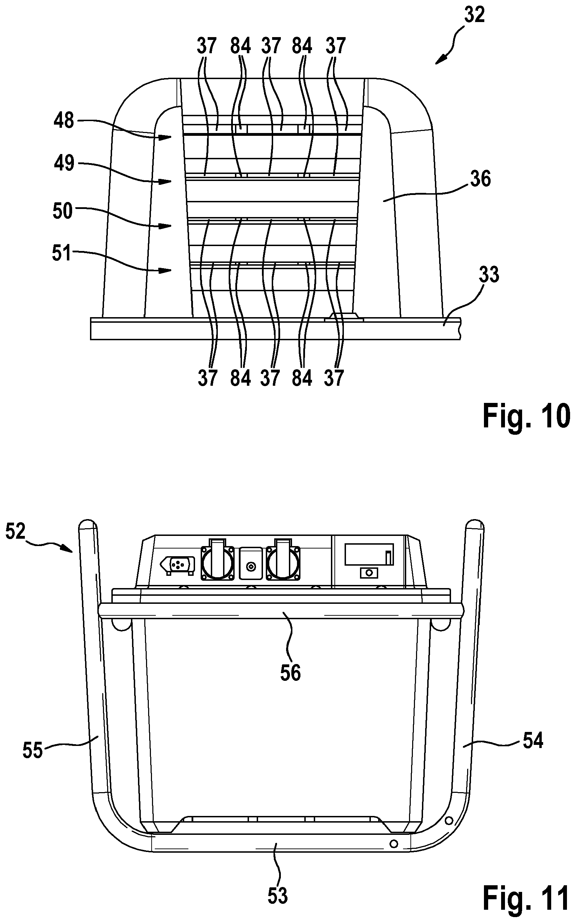

Fig. 10 zeigt eine vergrößerte Darstellung der zusätzlichen dritten Seitenwand 36 der zweiten Ausbuchtung 32. In dieser Darstellung sind vier Reihen 48,49,50,51 von Schlitzen 37 vorgesehen. Jede Reihe weist in dem dargestellten Ausführungsbeispiel drei Schlitze auf. Die Schlitze der Reihen 48, 49, 50, 51 sind parallel zueinander angeordnet. Zudem sind in dem dargestellten Ausführungsbeispiel die Schlitze 37 einer Reihe über Streben 84 voneinander getrennt. Weiterhin weisen die Schlitze 37 der verschiedenen Reihen 48, 49, 50, 51 gleiche Breiten aber unterschiedliche Längen auf. Die Länge der Schlitze 37 nimmt von oben nach unten in Richtung auf den Deckelboden 33 ab. Zudem kann abhängig von der gewählten Ausführungsform auch die Breite der Schlitze 37 von oben nach unten abnehmen. Abhängig von der gewählten Ausführungsform kann die Länge der Schlitze konstant bleiben und nur die Breite der Schlitze ausgehend von der ersten Reihe 48 in Richtung auf die vierte Reihe 51 stufenweise von Reihe zu Reihe in Richtung auf den Deckelboden 33 abnehmen.

Fig. 11 zeigt in einer schematischen Darstellung das Gehäuse 1, das in einem Tragrahmen 52 angeordnet ist. Der Tragrahmen 52 weist einen ersten Bodenabschnitt 53 auf, der auf einer rechten Seite in einen ersten Seitenabschnitt 54 und auf einer linken Seite in einen zweiten Seitenabschnitt 55 übergeht. Der erste Bodenabschnitt 53 ist im Wesentlichen gerade ausgebildet und parallel zum Boden 6 des Gehäuses 1 angeordnet. Der erste Bodenabschnitt 53 geht über gekrümmte Bogenabschnitte in den ersten und den zweiten Seitenabschnitt 54, 55 über. Der erste und der zweite Seitenabschnitt 54, 55 erstrecken sich nach oben bis über die Oberseite des zweiten Teilgehäuses 3. Der erste und der zweite Seitenabschnitt 54, 55 können senkrecht zum ersten Bodenabschnitt 53 oder in einem Winkel größer 90° geneigt nach außen, d.h. vom ersten Bodenabschnitt 53 bzw. vom Gehäuse 1 geneigt ausgebildet sein, wie in Fig. 11 dargestellt.

Abhängig von der gewählten Ausführungsform kann zwischen dem ersten und dem zweiten Seitenabschnitt 54, 55 ein erster Verbindungsabschnitt 56 gerader vorgesehen sein. Der erste und der zweite Seitenabschnitt 54, 55 sind seitlich beabstandet von den Eckbereichen und den Seitenwänden des Gehäuses 1 angeordnet. Der erste Verbindungsabschnitt 56 ist in dem dargestellten Ausführungsbeispiel auf der Höhe des Rahmens 11 und parallel zum ersten Bodenabschnitt 53 angeordnet. Abhängig von der gewählten Ausführungsform kann der erste Verbindungsabschnitt 56 auch in einem anderen Winkel und/oder in einer anderen Form ausgebildet sein. Zudem kann auch auf den ersten Verbindungsabschnitt 56 verzichtet werden.

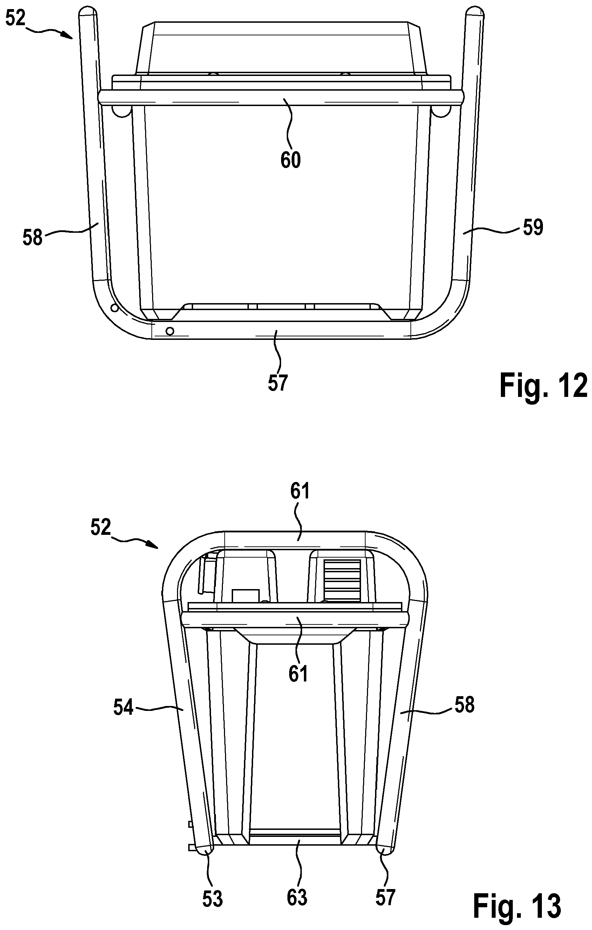

Fig. 12 zeigt eine zweite Seitenansicht des Gehäuses und des Tragrahmens 52, die gegenüberliegend zur Seitenansicht der Fig. 11 gewählt ist. Der Tragrahmen 52 weist einen zweiten Bodenabschnitt 57 auf, der auf der linken Seite über einen gekrümmten Bogenabschnitt in einen dritten Seitenabschnitt 58 und auf der rechten Seite über einen gekrümmten Bogenabschnitt in einen vierten Seitenabschnitt 59 übergeht. Der zweite Bodenabschnitt 57 ist gerade ausgebildet und parallel zum ersten Bodenabschnitt 53 angeordnet. Der dritte und der vierte Seitenabschnitt 58, 59 erstrecken sich nach oben bis über die Oberseite des zweiten Teilgehäuses 3. Der dritte und der vierte Seitenabschnitt 58, 59 können senkrecht zum zweiten Bodenabschnitt 57 oder in einem Winkel größer 90° geneigt nach außen, d.h. vom zweiten Bodenabschnitt 57 bzw. vom Gehäuse 1 geneigt ausgebildet sein. Weiterhin ist ein zweiter Verbindungsabschnitt 60 angeordnet, der den dritten und den vierten Seitenabschnitt 58, 59 miteinander verbindet. Der zweite Verbindungsabschnitt 60 ist gerade ausgebildet und parallel zum zweiten Bodenabschnitt 57 angeordnet. Abhängig von der gewählten Ausführungsform kann der zweite Verbindungsabschnitt 60 auch in einem anderen Winkel und/oder in einer anderen Form ausgebildet sein. Zudem kann auch auf den zweiten Verbindungsabschnitt 60 verzichtet werden.

Fig. 13 zeigt eine weitere Seitenansicht des Tragrahmens 52 und des Gehäuses 1. Dabei ist zu erkennen, dass der erste und der dritte Seitenabschnitt 54, 58 ausgehend von dem ersten und dem zweiten Bodenabschnitt 53, 57 nach oben und nach außen geneigt angeordnet sind. Der erste und der dritte Seitenabschnitt 54, 58 sind über einen ersten oberen Abschnitt 61 miteinander verbunden. Dabei gehen der erste und der dritte Seitenabschnitt 54, 58 über einen entsprechenden Biegeabschnitt in den ersten oberen Abschnitt 61 über. Der erste obere Abschnitt 61 ist oberhalb der Oberseite des zweiten Teilgehäuses 3 angeordnet. Zudem ist ein dritter Verbindungsabschnitt 62 zwischen dem ersten und dem dritten Seitenabschnitt 54, 58 angeordnet. Der dritte Verbindungsabschnitt 62 ist gerade ausgebildet und auf der Höhe des Rahmens 11 angeordnet. Abhängig von der gewählten Ausführungsform kann der dritte Verbindungsabschnitt 62 eine andere Form aufweisen und/oder in einem anderen Winkel oder einer anderen Höhe angeordnet sein. Zudem kann auf den dritten Verbindungsabschnitt 62 auch verzichtet werden. Zwischen dem ersten und dem zweiten Bodenabschnitt 53, 57 ist eine erste Bodenstrebe 63 ausgebildet. Das Gehäuse 1 sitzt auf der Bodenstrebe 63 auf.

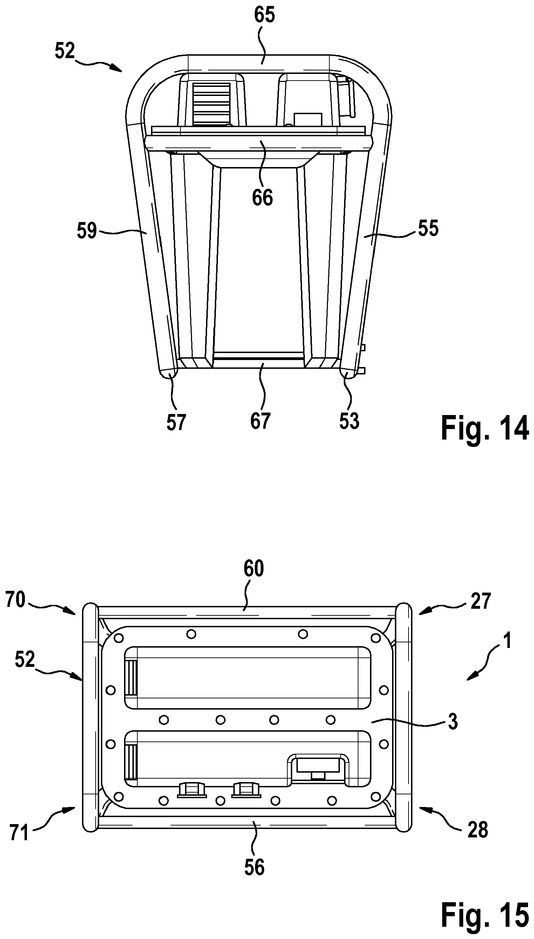

Fig. 14 zeigt eine Ansicht auf eine weitere Seite des Gehäuses 1 und des Tragrahmens 52, die gegenüber liegend zu der Ansicht der Figur 13 ist. Der vierte Seitenabschnitt 59 und der zweite Seitenabschnitt gehen über entsprechende Bogenabschnitte in einen zweiten oberen Abschnitt 65 über. Der zweite obere Abschnitt 65 ist oberhalb des zweiten Teilgehäuses 3 angeordnet. Der zweite obere Abschnitt 65 ist parallel zum ersten oberen Abschnitt 61 angeordnet. Zudem ist ein vierter Verbindungsabschnitt 66 vorgesehen, der den vierten Seitenabschnitt 59 mit dem zweiten Seitenabschnitt 55 verbindet. Der vierte Verbindungsabschnitt 66 ist auf der Höhe des Rahmens 11 angeordnet. Abhängig von der gewählten Ausführungsform kann auf den vierten Verbindungsabschnitt 66 verzichtet werden oder der vierte Verbindungsabschnitt 66 kann eine andere Form oder eine andere Anordnung aufweisen.

Der vierte Seitenabschnitt 59 und der zweite Seitenabschnitt 55 sind ausgehend von den Bodenabschnitten 53,57 nach oben und nach außen geneigt in Richtung auf den zweiten oberen Abschnitt 65 angeordnet. Weiterhin ist eine zweite Bodenstrebe 67 vorgesehen, die den zweiten Bodenabschnitt 57 mit dem ersten Bodenabschnitt 53 verbindet. Das Gehäuse 1 sitzt auf der zweiten Bodenstrebe 67 auf.

Fig. 15 zeigt eine Ansicht von oben auf den Tragrahmen 52 und das zweite Teilgehäuse 3 des Gehäuses 1. Dabei ist zu erkennen, dass das Gehäuse 1 auf allen vier Seiten mit einem vorgegebenen Freiraum beabstandet zu dem Tragrahmen 52 angeordnet ist. Zudem sind der erste, der zweite, der dritte und der vierte Seitenabschnitt 54, 55, 58, 59 in Eckbereichen 27, 28, 70, 71 des Gehäuses 1 angeordnet. Somit sind die Eckbereiche des Gehäuses 1 durch die entsprechenden Seitenabschnitte des Tragrahmens 52 geschützt. Auch die Seitenabschnitte 58, 60 und die dritten und vierten Verbindungsabschnitte 62, 66 sind seitlich beabstandet zum Gehäuse angeordnet. Somit ist das Gehäuse 1 nur über die Bodenstreben 63, 64 mit dem Tragrahmen 52 direkt verbunden.

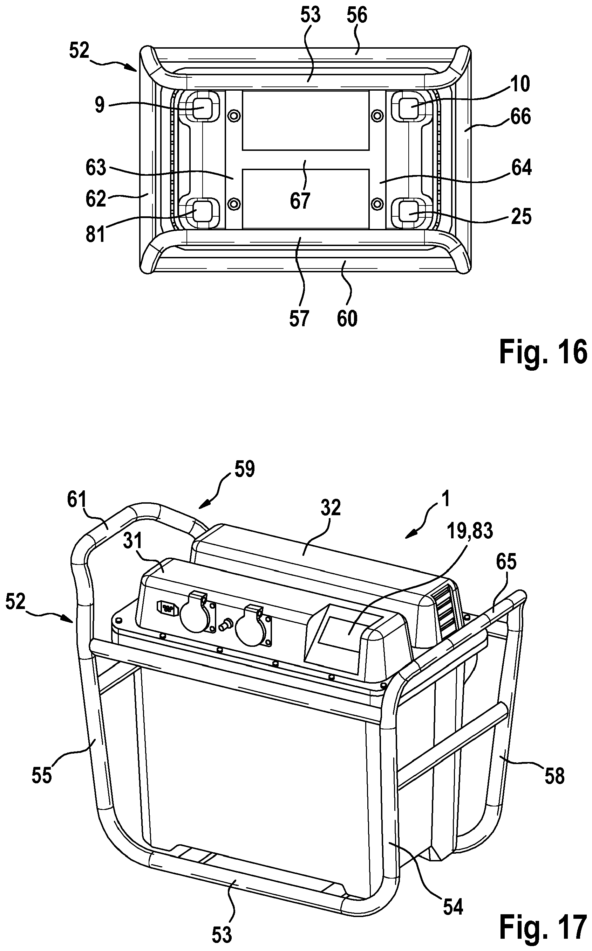

Fig. 16 zeigt eine Ansicht von unten auf den Tragrahmen 52 und das Gehäuse 1. In der dargestellten Ausführungsform sind die erste und die zweite Bodenstrebe 63, 64 über eine dritte Bodenstrebe 67 miteinander verbunden. Abhängig von der gewählten Ausführungsform kann auf die dritte Bodenstrebe 67 verzichtet werden. Zudem kann auch nur eine Bodenstrebe vorgesehen sein. Weiterhin kann anstelle einer Bodenstrebe eine Bodenplatte ausgebildet sein, die mit den Bodenabschnitten 53,57 verbunden ist, wobei das Gehäuse auf der Bodenplatte aufsitzt.

Die erste und die zweite Bodenstrebe 63, 64 weist Löcher auf, durch die Schrauben geführt sind, wobei die Schrauben in die Befestigungsmittel 42 des Bodens 6 eingeschraubt sind. Zudem ist zu erkennen, dass der erste und der zweite Bodenabschnitt 53, 57 seitlich neben den Füßen 9, 10, 25, 81 angeordnet sind. Zudem sind die Bodenstreben 63, 64 zwischen den Füßen 9,10,25,81 angeordnet.

Durch diese Anordnung kann das Gehäuse 1 sich seitlich gegenüber dem Tragrahmen 52 gedämpft bewegen, insbesondere schwingen, ohne dass das Gehäuse 1 seitlich am Tragrahmen 52 anliegt. Mithilfe der vibrationsdämpfenden Verbindung zwischen den Bodenstreben 53, 54 und dem Boden 6 des Gehäuses 1 können seitliche Schwingungen zwischen dem Tragrahmen 52 und dem Gehäuse 1 gedämpft werden.

Das Gehäuse 1 ist durch den Tragrahmen 52 gegenüber mechanischen Beschädigungen, insbesondere beim Umfallen gegenüber mechanischen Beschädigungen geschützt. Der Tragrahmen 52 kann einteilig ausgebildet sein. Zudem kann der Tragrahmen 52 aus Rohren gebildet sein. Die Bodenstreben 63, 64, 67 können aus einem Material mit einem rechteckförmigen Querschnitt, insbesondere aus Flachstahl, gebildet sein. Dadurch wird erreicht, dass die Bodenstreben 63, 64, 67 in der Höhe versetzt nach oben gegenüber den Bodenabschnitten 53, 57 angeordnet sind. Zudem kann eine elastische Durchbiegung der Bodenstreben 63,64,67 in der z-Richtung bei gleichzeitiger Stabilität in der x-y-Ebene erreicht werden.

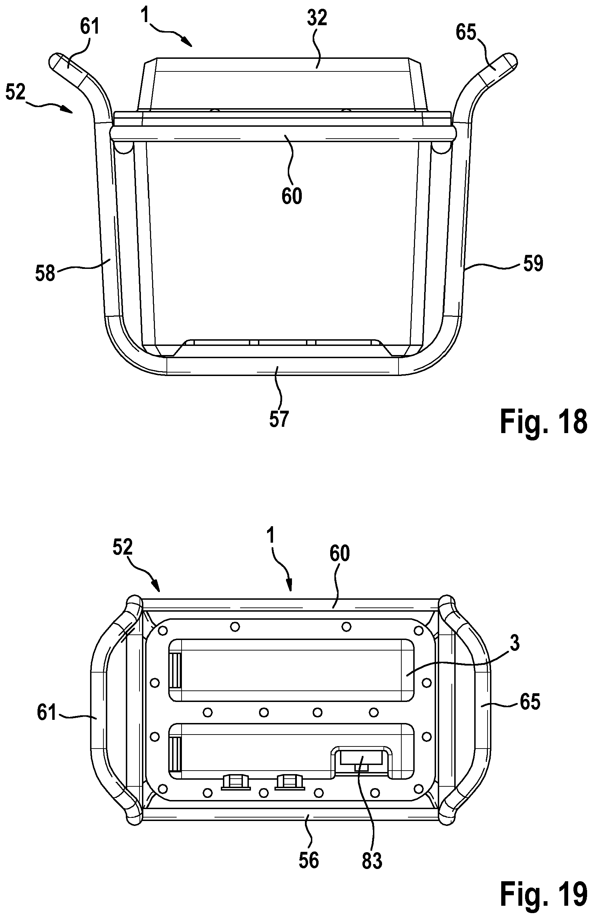

Fig. 17 zeigt in einer perspektivischen Darstellung eine weitere Ausführungsform eines Gehäuses 1 und eines Tragrahmens 52, wobei in dieser Ausführungsform der erste obere Abschnitt 61 und der zweite obere Abschnitt 65 seitlich nach außen weg vom Gehäuse 1 geführt sind. Dadurch weisen der erste obere Abschnitt 61 und der zweite obere Abschnitt 65 einen größeren Abstand zum Gehäuse 1 auf. Somit steht mehr Platz zum Angreifen an die oberen Abschnitte zur Verfügung. Fig. 18 zeigt dies deutlich in einer Seitenansicht. Ebenso kann dies anhand von Fig. 19, die eine Ansicht von oben zeigt, erkannt werden.

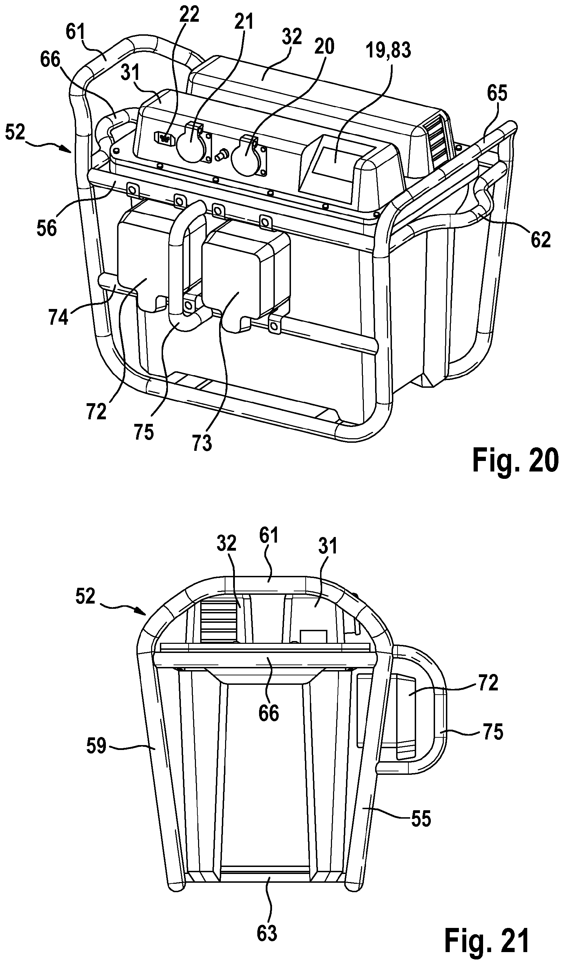

Fig. 20 zeigt eine weitere Ausführungsform, bei der zusätzlich zu der Ausführungsform der Figuren 17 bis 19 auch der dritte Verbindungsabschnitt 62 und der vierte Verbindungsabschnitt 66 in einem Mittenbereich seitlich nach außen weg vom Gehäuse 1 gebogen ausgebildet sind. Dadurch ist auch in Bezug auf den dritten und vierten Verbindungsabschnitt 62,66 mehr Raum zum Angreifen vorhanden. Weiterhin ist in dieser Ausführungsform ein vierter und ein fünfter elektrischer Anschluss 72, 73 am Tragrahmen 52 ausgebildet. Der vierte und der fünfte elektrische Anschluss 72, 73 können in Form einer Steckdose ausgebildet sein. Der vierte und fünfte elektrische Anschluss 72,73 ist über entsprechende elektrische Leitungen mit der Batterie bzw. mit dem Gehäuse 1 verbunden. Beispielsweise kann eine elektrische Leitung in den ersten und den zweiten elektrischen Anschluss 20, 21 eingesteckt sein oder separat durch das Gehäuse zur Batterie geführt sein. Der vierte und der fünfte elektrische Anschluss 72, 73 kann einen anderen Geometrie als der erste oder der zweite elektrische Anschluss aufweisen. Es ist ein weiterer Verbindungsabschnitt 74 vorgesehen sein, der parallel zum ersten Verbindungsabschnitt 56 angeordnet ist und mit dem ersten und dem zweiten Seitenabschnitt 54, 55 verbunden ist. Der vierte und der fünfte elektrische Anschluss 72, 73 sind mit dem ersten und dem weiteren Verbindungsabschnitt 56, 74 verbunden. Dadurch wird eine stabile Halterung des vierten und des fünften elektrischen Anschlusses 72,73 erreicht. In einer einfachen Ausführung können der vierte und/oder der fünfte elektrische Anschluss 72,73 auch nur am ersten Verbindungsabschnitt 56 befestigt sein. In einer weiteren Ausführung können der vierte und/oder der fünfte elektrische Anschluss 72,73 auch an einem anderen Teil des Tragrahmens 52 befestigt sein.

Zudem kann ein Schutzbügel 75 vorgesehen sein, der den vierten und/oder den fünften elektrischen Anschluss 72, 73 gegen mechanische Beschädigungen schützt. Beispielsweise kann der Schutzbügel 75 zwischen dem ersten Verbindungsabschnitt 56 und dem weiteren Verbindungsabschnitt 74 ausgebildet sein, wie in Fig. 20 dargestellt ist. Dabei ragt der Schutzbügel 75 seitlich nach vorne über den Tragrahmen 52 heraus, wie anhand von Fig. 21 ersichtlich ist. Damit sind der vierte und der fünfte elektrische Anschluss 72, 73 seitlich und von oben und von unten gegenüber mechanischen Einwirkungen geschützt. Der Schutzbügel 75 ist mit dem vierten und dem fünften elektrischen Anschluss 72, 73 verbunden und überragt seitlich den vierten und den fünften elektrischen Anschluss 72, 73. Beispielsweise können der vierte und fünfte elektrische Anschluss eine Geometrie gemäß einer anderen Norm, insbesondere einer anderen Landesnorm als die anderen elektrischen Anschlüsse des Gehäuses ausgebildet sein.

Die elektrischen Anschlüsse des Gehäuses 1 können eine Gleichspannung oder eine Wechselspannung ausgeben. Zudem kann wenigstens ein elektrischer Anschluss in Form eines USB Anschlusses ausgebildet sein. Zudem kann wenigstens ein elektrischer Anschluss als Eingang für eine Wechselspannung oder als Eingang für eine Gleichspannung ausgebildet sein. Das Gehäuse kann ein Ladegerät aufweisen, über das die Batterie mit einer Gleichspannung oder mit einer Wechselspannung aufgeladen wird.

Weiterhin kann das Gehäuse 1 eine induktive Zone aufweisen, über das Energie drahtlos zum Ladegerät übertragen werden kann.

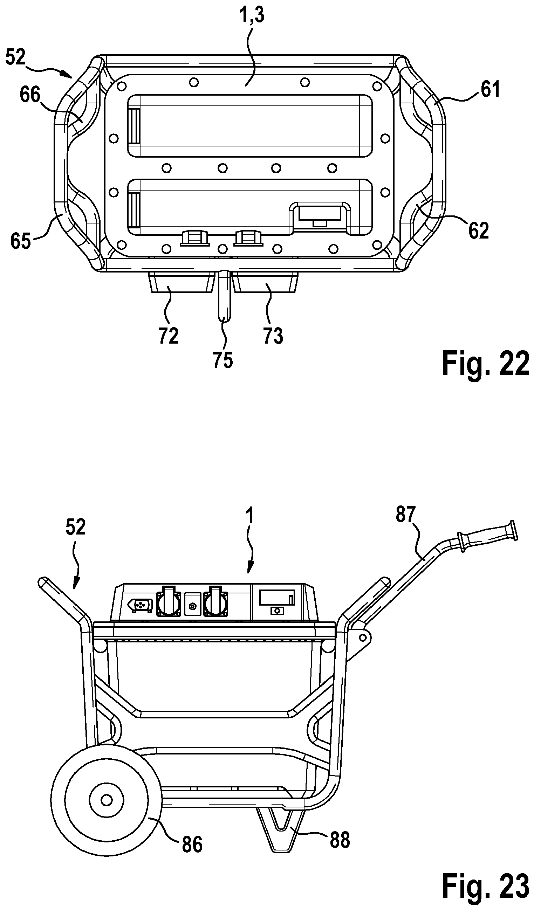

Fig. 22 zeigt eine Ansicht von oben auf die Ausführung der Figuren 20 und 21. Abhängig von der gewählten Ausführungsform können einige oder mehrere Elemente des Tragrahmens 52 anders ausgebildet werden als in den beschriebenen Figuren erläutert ist. Bei allen Ausführungen kann der Tragrahmen ein oder mehrere Räder aufweisen, um das mobile Stromversorgungsgerät leicht bewegen zu können. In einer einfachen Ausführung kann das Gehäuse 1 auch nur auf den Tragrahmen 52 aufgesetzt sein. Zudem können in den Bodenstreben Stifte vorgesehen sein, die beim Aufsetzen des Gehäuses 1 in die Aufnahmen des Bodens 6 eingeschoben werden.

Fig. 23 zeigt in einer Seitenansicht einen Tragrahmen 52, in dem ein mobiles Stromversorgungsgerät 1 angeordnet ist. Der Tragrahmen 52 weist zwei Räder 86, zwei Haltegriffe 87 und einen Standfuß 88 auf. Durch die Seitenansicht ist jeweils nur ein Rad 86 und ein Haltegriff 87 sichtbar.

## Patentansprüche

1. Mobiles Stromversorgungsgerät mit einem Gehäuse (1), das zwei Teilgehäuse (2, 3) aufweist, wobei das erste Teilgehäuse (2) einen Boden (6) und vier Seitenwände (5, 7, 8, 39) aufweist, wobei das zweite Teilgehäuse (3) eine Deckelwand (35, 38) und Seitenwände (15, 16, 17, 34, 40, 41, 36, 85) aufweist, wobei das zweite Teilgehäuse (3) auf das erste Teilgehäuse (2) aufgesetzt ist, wobei das erste und das zweite Teilgehäuse (2, 3) über Verbindungsmittel (4) verbunden sind, wobei die Seitenwände des zweiten Teilgehäuses (3) eine kleinere Höhe als die Seitenwände des ersten Teilgehäuses (2) aufweisen, wobei die vier Seitenwände (15, 16, 17, 34) des ersten Teilgehäuses (2) in einen ersten Rahmen (11) übergehen, wobei sich der erste Rahmen (11) seitlich über die Seitenwände (15, 16, 17, 34) des ersten Teilgehäuses (2) hinaus erstreckt, wobei die Seitenwände (40, 41, 36, 85) des zweiten Teilgehäuses (3) in einen zweiten Rahmen (14) übergehen, wobei sich der zweite Rahmen(14) seitlich über die Seitenwände (36, 40, 41, 85) des zweiten Teilgehäuses (3) hinaus erstreckt, wobei der erste Rahmen (11) und der zweite Rahmen (14) aufeinander aufliegen, und wobei die Verbindungsmittel (4) im ersten Rahmen (11) und im zweiten Rahmen (14) angeordnet sind, **dadurch gekennzeichnet, dass** das zweite Teilgehäuse (3) zwei Ausbuchtungen (31, 32) aufweist, wobei die zwei Ausbuchtungen (31, 32) nebeneinander angeordnet sind, wobei sich die Ausbuchtungen (31, 32) ausgehend vom zweiten Rahmen (14) nach oben erstrecken, wobei zwischen den zwei Ausbuchtungen (31, 32) ein Deckelboden (33) ausgebildet ist, wobei der Deckelboden (33) auf der Höhe des zweiten Rahmens (14) angeordnet ist, wobei das erste Teilgehäuse (2) zur Aufnahme einer aufladbaren Batterie vorgesehen ist, und wobei das zweite Teilgehäuse (3) zur Aufnahme elektrischer und/oder mechanischer Komponenten vorgesehen ist.

2. Mobiles Stromversorgungsgerät nach Anspruch 1, **dadurch gekennzeichnet, dass** an der ersten Ausbuchtung (31) wenigstens ein elektrischer Anschluss (20, 21, 22), insbesondere eine Steckdose zum Anschließen einer elektrischen Leitung vorgesehen ist.

3. Mobiles Stromversorgungsgerät nach einem der vorhergehenden Ansprüche, **dadurch gekennzeichnet, dass** an einer der Ausbuchtungen (31, 32) eine Anzeige (19) zur Darstellung einer Information vorgesehen ist.

4. Mobiles Stromversorgungsgerät nach einem der vorhergehenden Ansprüche, **dadurch gekennzeichnet, dass** die zweite Ausbuchtung (32) Schlitze (37) für eine Belüftung aufweist, wobei insbesondere an gegenüber liegenden Seitenwänden (36, 41) der zweiten Ausbuchtung (32) Schlitze (37) vorgesehen sind.

5. Mobiles Stromversorgungsgerät nach Anspruch 4, **dadurch gekennzeichnet, dass** die zweite Ausbuchtung (32) zur Aufnahme eines Kühlelementes vorgesehen ist.

6. Mobiles Stromversorgungsgerät nach einem der vorhergehenden Ansprüche, **dadurch gekennzeichnet, dass** sich die zwei Ausbuchtungen (31, 32) entlang einer Längsseite des Gehäuses (1) erstrecken, und wobei die zwei Ausbuchtungen (31, 32) nebeneinander angeordnet sind.

7. Mobiles Stromversorgungsgerät nach einem der vorhergehenden Ansprüche, **dadurch gekennzeichnet, dass** auf einer Unterseite des Bodens (6) des ersten Teilgehäuses (2) wenigstens zwei Füße (9, 10, 25, 81) vorgesehen sind, und wobei die zwei Füße (9, 10, 25, 81) in einer Längsrichtung des Gehäuses (1) in einem vorgegebenen Abstand angeordnet sind.

8. Mobiles Stromversorgungsgerät nach einem der vorhergehenden Ansprüche, **dadurch gekennzeichnet, dass** im Boden (6) des ersten Teilgehäuses (2) wenigstens ein weiteres Befestigungsmittel (42) vorgesehen ist, wobei das weitere Befestigungsmittel (42) in Form einer Aufnahme (45) für ein Verbindungsmittel, insbesondere eine Schraube ausgebildet ist, wobei die Aufnahme (45) elastisch mit dem Boden (6) verbunden ist, wobei insbesondere die Aufnahme (45) in Form einer Hülse ausgebildet ist, wobei die Hülse (45) insbesondere seitlich über Stege (43) mit dem Boden (6) elastisch verbunden ist.

9. Mobiles Stromversorgungsgerät nach einem der vorhergehenden Ansprüche, **dadurch gekennzeichnet, dass** im ersten Rahmen (11) Löcher (44) ausgebildet sind, wobei die Löcher (44) durch den ersten Rahmen (11) geführt sind und eine Belüftung und/oder eine Entwässerung eines Raumes ermöglichen, der vom ersten und vom zweiten Teilgehäuse (2, 3) im Bereich des ersten und des zweiten Rahmens (11, 14) begrenzt wird.

10. Mobiles Stromversorgungsgerät nach einem der vorhergehenden Ansprüche, **dadurch gekennzeichnet, dass** der erste Rahmen (11) und der zweite Rahmen (14) wenigstens abschnittsweise in einem Abschnitt über eine Nut (46) und einen Randbereich (47) miteinander mechanisch verbunden sind.

11. Tragrahmen (52) mit einem mobilen Stromversorgungsgerät nach einem der vorhergehenden Ansprüche, **dadurch gekennzeichnet, dass** der Tragrahmen (52) wenigstens zwei Bodenabschnitte (53, 57) aufweist, wobei die zwei Bodenabschnitte (53, 57) nebeneinander angeordnet sind, wobei die Bodenabschnitte (53, 57) wenigstens über eine Bodenstrebe (63, 64) miteinander verbunden sind, wobei die Bodenabschnitte (53, 56) in jeweils zwei Seitenabschnitte (54, 55, 58, 59) übergehen, wobei das Gehäuse (1) mit dem Boden (6) auf der Bodenstrebe (63, 64) aufsitzt, wobei die vier Seitenabschnitte (54, 55, 58, 59) im Bereich von vier Eckbereichen (27, 28, 70, 71) des ersten Teilgehäuses (2) angeordnet sind, und wobei die Seitenabschnitte (54, 55, 58, 59) nach oben bis über das Gehäuse (1) hinaus geführt sind.

12. Tragrahmen (52) nach Anspruch 11, **dadurch gekennzeichnet, dass** der Tragrahmen (52) zwei Bodenstreben (63, 64) aufweist, und wobei das erste Teilgehäuse (2) an den zwei Bodenstreben (63, 64) befestigt ist.

13. Tragrahmen (52) nach einem der vorhergehenden Ansprüch 11 oder 12, **dadurch gekennzeichnet, dass** das erste Teilgehäuse (2) mithilfe des weiteren Befestigungsmittels (42) an der Bodenstrebe (63, 64) befestigt ist, so dass eine gedämpfte Schwingung des Gehäuses (1) gegenüber dem Tragrahmen (52) möglich ist.

14. Tragrahmen (52) nach einem der vorhergehenden Ansprüch 11 bis 13, **dadurch gekennzeichnet, dass** am Tragrahmen (52) wenigstens ein weiterer elektrischer Anschluss (72, 73), insbesondere eine Steckdose zum Anschließen eines elektrischen Kabels vorgesehen ist, und wobei insbesondere ein Schutzbügel (75) zum Schutz des weiteren elektrischen Anschlusses (72, 73) am Tragrahmen (52) ausgebildet ist.

15. Tragrahmen (52) nach einem der vorhergehenden Ansprüch 11 bis 14, **dadurch gekennzeichnet, dass** die Seitenwände des Gehäuses (1) von dem Tragrahmen (52) seitlich beabstandet sind, und wobei insbesondere nur der Boden (6) des Gehäuses (1) direkt am Tragrahmen (52) anliegt.

## Claims

1. Mobile power supply device comprising a housing (1) which has two part-housings (2, 3), wherein the first part-housing (2) has a base (6) and four side walls (5, 7, 8, 39), wherein the second part-housing (3) has a lid wall (35, 38) and side walls (15, 16, 17, 34, 40, 41, 36, 85), wherein the second part-housing (3) is mounted onto the first part-housing (2), wherein the first and the second part-housing (2, 3) are connected by means of connecting means (4), wherein the side walls of the second part-housing (3) have a smaller height than the side walls of the first part-housing (2), wherein the four side walls (15, 16, 17, 34) of the first part-housing (2) merge into a first frame (11), wherein the first frame (11) extends laterally beyond the side walls (15, 16, 17, 34) of the first part-housing (2), wherein the side walls (40, 41, 36, 85) of the second part-housing (3) merge into a second frame (14), wherein the second frame (14) extends laterally beyond the side walls (36, 40, 41, 85) of the second part-housing (3), wherein the first frame (11) and the second frame (14) rest one on the other, and wherein the connecting means (4) are arranged in the first frame (11) and in the second frame (14), **characterized in that** the second part-housing (3) has two protrusions (31, 32), wherein the two protrusions (31, 32) are arranged next to one another, wherein the protrusions (31, 32) extend upwards starting from the second frame (14), wherein a lid base (33) is formed between the two protrusions (31, 32), wherein the lid base (33) is arranged level with the second frame (14), wherein the first part-housing (2) is intended to accommodate a rechargeable battery, and wherein the second part-housing (3) is intended to accommodate electrical and/or mechanical components.

2. Mobile power supply device according to Claim 1, **characterized in that** at least one electrical connection (20, 21, 22), in particular a socket for the connection of an electrical line, is provided on the first protrusion (31).

3. Mobile power supply device according to either of the preceding claims, **characterized in that** a display (19) for displaying an item of information is provided on one of the protrusions (31, 32).

4. Mobile power supply device according to one of the preceding claims, **characterized in that** the second protrusion (32) has slots (37) for ventilation, wherein slots (37) are provided, in particular, on opposite side walls (36, 41) of the second protrusion (32).

5. Mobile power supply device according to Claim 4, **characterized in that** the second protrusion (32) is intended to accommodate a cooling element.

6. Mobile power supply device according to one of the preceding claims, **characterized in that** the two protrusions (31, 32) extend along a longitudinal side of the housing (1), and wherein the two protrusions (31, 32) are arranged next to one another.

7. Mobile power supply device according to one of the preceding claims, **characterized in that** at least two feet (9, 10, 25, 81) are provided on a bottom side of the base (6) of the first part-housing (2), and wherein the two feet (9, 10, 25, 81) are arranged at a prespecified distance in a longitudinal direction of the housing (1).

8. Mobile power supply device according to one of the preceding claims, **characterized in that** at least one further fastening means (42) is provided in the base (6) of the first part-housing (2), wherein the further fastening means (42) is embodied in the form of a receptacle (45) for a connecting means, in particular a screw, wherein the receptacle (45) is elastically connected to the base (6), wherein, in particular, the receptacle (45) is embodied in the form of a sleeve, wherein the sleeve (45) is elastically connected to the base (6), in particular laterally by means of webs (43).

9. Mobile power supply device according to one of the preceding claims, **characterized in that** holes (44) are formed in the first frame (11), wherein the holes (44) are routed through the first frame (11) and allow ventilation and/or drainage of a space which is delimited by the first and by the second part-housing (2, 3) in the region of the first and of the second frame (11, 14).

10. Mobile power supply device according to one of the preceding claims, **characterized in that** the first frame (11) and the second frame (14) are mechanically connected to one another at least in sections in one section by means of a groove (46) and an edge region (47).

11. Supporting frame (52) comprising a mobile power supply device according to one of the preceding claims, **characterized in that** the supporting frame (52) has at least two base sections (53, 57), wherein the two base sections (53, 57) are arranged next to one another, wherein the base sections (53, 57) are connected to one another at least by means of one base strut (63, 64), wherein the base sections (53, 56) each merge into two side sections (54, 55, 58, 59), wherein the housing (1) sits on the base strut (63, 64) by way of the base (6), wherein the four side sections (54, 55, 58, 59) are arranged in the region of four corner regions (27, 28, 70, 71) of the first part-housing (2), and wherein the side sections (54, 55, 58, 59) are routed upwards to a point beyond the housing (1).

12. Supporting frame (52) according to Claim 11, **characterized in that** the supporting frame (52) has two base struts (63, 64), and wherein the first part-housing (2) is fastened to the two base struts (63, 64).

13. Supporting frame (52) according to either of the preceding Claims 11 and 12, **characterized in that** the first part-housing (2) is fastened to the base strut (63, 64) with the aid of the further fastening means (42), so that damped vibration of the housing (1) in relation to the supporting frame (52) is possible.

14. Supporting frame (52) according to one of the preceding Claims 11 to 13, **characterized in that** at least one further electrical connection (72, 73), in particular a socket for the connection of an electrical cable, is provided on the supporting frame (52), and wherein, in particular, a protective clip (75) for protecting the further electrical connection (72, 73) is formed on the supporting frame (52).

15. Supporting frame (52) according to one of the preceding Claims 11 to 14, **characterized in that** the side walls of the housing (1) are at a lateral distance from the supporting frame (52), and wherein, in particular, only the base (6) of the housing (1) bears directly against the supporting frame (52).

## Revendications

1. Appareil d'alimentation électrique mobile comprenant un boîtier (1) qui comporte deux boîtiers partiels (2, 3), dans lequel le premier boîtier partiel (2) comporte un fond (6) et quatre parois latérales (5, 7, 8, 39), dans lequel le deuxième boîtier partiel (3) comporte une paroi de recouvrement (35, 38) et des parois latérales (15, 16, 17, 34, 40, 41, 36, 85), dans lequel le deuxième boîtier partiel (3) est monté sur le premier boîtier partiel (2), dans lequel les premier et deuxième boîtiers partiels (2, 3) sont reliés par des moyens de liaison (4), dans lequel les parois latérales du deuxième boîtier partiel (3) ont une hauteur inférieure à celle des parois latérales du premier boîtier partiel (2), dans lequel les quatre parois latérales (15, 16, 17, 34) du premier boîtier partiel (2) fusionnent en un premier châssis (11),
dans lequel le premier châssis (11) s'étend latéralement au-delà des parois latérales (15, 16, 17, 34) du premier boîtier partiel (2), dans lequel les parois latérales (40, 41, 36, 85) du deuxième boîtier partiel (3) fusionnent en un deuxième châssis (14), dans lequel le deuxième châssis (14) s'étend latéralement au-delà des parois latérales (36, 40, 41, 85) du deuxième boîtier partiel (3), dans lequel le premier châssis (11) et le deuxième châssis (14) reposent l'un sur l'autre, et dans lequel les moyens de liaison (4) sont disposés dans le premier châssis (11) et dans le deuxième châssis (14), **caractérisé en ce que** le deuxième boîtier partiel (3) présente deux renflements (31, 32), dans lequel les deux renflements (31, 32) sont disposés côte à côte, dans lequel les renflements (31, 32) s'étendent vers le haut à partir de l'avant du deuxième châssis (14), dans lequel un fond de couvercle (33) est formé entre les deux renflements (31, 32), dans lequel le fond de couvercle (33) est disposé à la hauteur du deuxième châssis (14), dans lequel le premier boîtier partiel (2) est prévu pour recevoir une batterie rechargeable et dans lequel le deuxième boîtier partiel (3) est prévu pour recevoir des composants électriques et/ou mécaniques.

2. Appareil d'alimentation électrique mobile selon la revendication 1, **caractérisé en ce qu'**il est prévu sur le premier renflement (31) au moins une borne électrique (20, 21, 22), en particulier une fiche, pour le raccordement d'une ligne électrique.

3. Appareil d'alimentation électrique mobile selon l'une des revendications précédentes, **caractérisé en ce qu'**il est prévu sur l'un des renflements (31, 32) un dispositif d'affichage (19) pour l'affichage d'informations.

4. Appareil d'alimentation électrique mobile selon l'une des revendications précédentes, **caractérisé en ce que** le deuxième renflement (32) présente des fentes (37) destinées à la ventilation, dans lequel il est en particulier prévu des fentes (37) sur les parois latérales opposées (36, 41) du deuxième renflement (32).

5. Appareil d'alimentation électrique mobile selon la revendication 4, **caractérisé en ce que** le deuxième renflement (32) est prévu pour recevoir un élément de refroidissement.

6. Appareil d'alimentation électrique mobile selon l'une des revendications précédentes, **caractérisé en ce que** les deux renflements (31, 32) s'étendent le long d'un côté longitudinal du boîtier (1) et dans lequel les deux renflements (31, 32) sont disposés côte à côte.

7. Appareil d'alimentation électrique mobile selon l'une des revendications précédentes, **caractérisé en ce qu'**il est prévu au moins deux pieds (9, 10, 25, 81) sur une face inférieure du fond (6) du premier boîtier partiel (2) et dans lequel les deux pieds (9, 10, 25, 81) sont disposés à une distance prédéterminée dans une direction longitudinale du boîtier (1).

8. Appareil d'alimentation électrique mobile selon l'une des revendications précédentes, **caractérisé en ce qu'**il est prévu au moins un autre moyen de fixation (42) dans le fond (6) du premier boîtier partiel (2), dans lequel les autres moyens de fixation (42) sont réalisés sous la forme d'un réceptacle (45) destiné à un moyen de liaison, en particulier une vis, dans lequel le réceptacle (45) est relié élastiquement au fond (6), dans lequel le réceptacle (45) est en particulier réalisé sous la forme d'un manchon, dans lequel le manchon (45) est relié élastiquement au fond (6), en particulier latéralement, par des entretoises (43).

9. Appareil d'alimentation électrique mobile selon l'une des revendications précédentes, **caractérisé en ce que** des trous (44) sont réalisés dans le premier châssis (11), dans lequel les trous (44) passent à travers le premier châssis (11) et permettent une aération et/ou une élimination d'eau d'un espace délimité par les premier et deuxième boîtiers partiels (2, 3) dans la zone des premier et deuxième châssis (11, 14).

10. Appareil d'alimentation électrique mobile selon l'une des revendications précédentes, **caractérisé en ce que** le premier châssis (11) et le deuxième châssis (14) sont reliés mécaniquement l'un à l'autre au moins par sections dans une partie par l'intermédiaire d'une rainure (46) et d'une zone de bord (47).

11. Châssis de support (52) comprenant un appareil d'alimentation mobile selon l'une des revendications précédentes, **caractérisé en ce que** le châssis de support (52) comporte au moins deux parties inférieures (53, 57), dans lequel les deux parties inférieures (53, 57) sont disposées côte à côte, dans lequel les parties inférieures (53, 57) sont reliées entre elles au moins par l'intermédiaire d'une entretoise inférieure (63, 64), dans lequel les parties inférieures (53, 56) se rejoignent respectivement dans deux parties latérales (54, 55, 58, 59), dans lequel le boîtier (1) repose par le fond (6) sur l'entretoise inférieure (63, 64), dans lequel les quatre parties latérales (54, 55, 58, 59) sont disposées dans la zone des quatre régions d'angle (27, 28, 70, 71) du premier boîtier partiel (2) et dans lequel les parties latérales (54, 55, 58, 59) sont guidées vers le haut au-dessus du boîtier (1).

12. Châssis de support (52) selon la revendication 11, **caractérisé en ce que** le châssis de support (52) comporte deux entretoises inférieures (63, 64) et dans lequel le premier boîtier partiel (2) est fixé aux deux entretoises inférieures (63, 64).

13. Châssis de support (52) selon l'une des revendications 11 ou 12 précédentes, **caractérisé en ce que** le premier boîtier partiel (2) est fixé à l'entretoise inférieure (63, 64) à l'aide du moyen de fixation supplémentaire (42) de telle manière qu'une vibration amortie du boîtier (1) soit possible par rapport au châssis de support (52).

14. Châssis de support (52) selon l'une des revendications 11 à 13 précédentes, **caractérisé en ce qu'**il est prévu sur le châssis de support (52) au moins une autre borne électrique (72, 73), en particulier une fiche destinée à raccorder un câble électrique et dans lequel un étrier de protection (75) destiné à protéger l'autre raccordement électrique (72, 73) est en particulier réalisé sur le châssis de support (52).

15. Châssis de support (52) selon l'une des revendications 11 à 14 précédentes, **caractérisé en ce que** les parois latérales du boîtier (1) sont espacées latéralement du châssis de support (52) et dans lequel, en particulier, seul le fond (6) du boîtier (1) repose directement sur le châssis de support (52).
